# EUROPEAN PATENT APPLICATION

(11) **EP 4 745 532 A1**
(43) Date of publication of application: **20.05.2026**
(21) Application number: 24213210.8
(22) Date of filing: 15.11.2024
(51) Int. Cl.: G01D 11/24, G01D 5/244

(54) **SENSOR FOR DETECTING AN ANGULAR POSITION OF A SHAFT OF A DRIVE UNIT**

(71) Applicant: Pepperl+Fuchs SE, 68307 Mannheim (DE)
(72) Inventor: Geipel, Jörg, 15374 Müncheberg (DE); Geipel, Hannes, 10961 Berlin (DE)
(74) Representative: Tergau & Walkenhorst Intellectual Property GmbH

(57) **Abstract**

The invention relates to a sensor (1) for detecting an angular position of a shaft of a drive unit, comprising
- a sensor housing (2), adapted for being connected to a base plate (6),
- an element (4) adapted for being in an active connection with the shaft (10) of said drive unit (8), wherein the element (4) further comprises a cover (36),
- a base plate (6) having at least one opening (14) adapted for being fitted around said shaft (10) of said drive unit (8),

wherein the element (4) is arranged underneath the sensor housing (2) and within the at least one opening (14) adapted for being fitted around said shaft (10) of said drive unit (8) of the base plate (6),
wherein the sensor housing (2), the cover (36) and the opening (14) adapted for being fitted around said shaft (10) of said drive unit (8) have a predetermined size,
wherein the base plate (6) comprises at least two openings (12) adapted to allow the base plate (6) to be connected to the drive unit (8) by means of connecting elements, which are aligning mounting holes (48) in the drive unit (8), wherein the drive unit (8) is not part of the sensor (1), and
wherein the sensor housing (2) is adapted to be connected to the base plate (6) by means of a release mechanism.

Furthermore, a drive unit (8) comprising a sensor (1) for detecting an angular position of a shaft of a drive unit (8) is disclosed.

## Description

The present invention relates to a sensor for detecting an angular position of a shaft of a drive unit, a method for detecting an angular position of a shaft of a drive unit and a drive unit comprising a sensor for detecting an angular position of a shaft of a drive unit.

In recent years, there has been a growing trend to equip various drivers, drive units or actuators with sensors to enable their monitoring, control, and regulation.

So far it has been proposed by the state of the art to mount the sensors on the outside of the driver unit housing.

External mounting of sensors on a housing of a drive unit enhances accessibility for maintenance, inspection, and replacement, which helps to minimize downtime. The sensors can be reached without needing to disassemble the drive unit, facilitating quicker repairs.

Additionally, external mounting allows for easier modifications and upgrades to the sensor system. This means that new technologies can be integrated without altering the drive unit's internal components, streamlining the upgrade process and reducing potential installation errors.

From a manufacturing perspective, external mounting simplifies design and assembly processes. It reduces the need for specialized components required for internal mounting, potentially lowering production costs and lead times.

Moreover, external placement can improve thermal management by keeping sensors away from heat generated within the drive unit, thereby enhancing their accuracy and lifespan.

External mounting of sensors typically necessitates the use of additional components to ensure a secure and reliable installation. These components often include brackets, mounts, or protective enclosures. Brackets are used to provide a stable base for the sensor, ensuring it remains in the correct position. Mounts are used for attaching the sensor to various surfaces, whether they are flat, curved, or irregular. Protective enclosures are used for shielding the sensor from environmental factors such as dust, moisture, and extreme temperatures, which could otherwise affect its performance and longevity.

Depending on the different valve sizes, the actuators and their connection points are designed in different sizes. The different dimensions of the connection point are standardized and described in the VDI/VDE-3845 guideline. One challenge here is to adapt a sensor design to the different sizes or to a varying hole pattern of the screw-on holes.

This requirement can complicate the overall assembly process and lead to an increase in the total number of parts needed for the system.

This variability not only adds complexity to inventory management but also increases the potential for assembly errors, as it must be ensured that the correct parts for each specific application are used. Consequently, this can result in longer assembly times and higher production costs due to the need for a wider range of specialized components.

Based on these disadvantages of this state of the art, it is the task of the invention to provide a sensor, which manages with a smaller number of tailored to fit parts.

According to the invention, the object is met by a device as specified in claim 1.

Therefore, a sensor for detecting an angular position of a shaft of a drive unit is proposed by the invention, comprising:
- a sensor housing, adapted for being connected to a base plate,
- an element adapted for being in an active connection with the shaft of said drive unit,
   wherein the element further comprises a cover,
- a base plate having at least one opening adapted for being fitted around said shaft of said drive unit,

wherein the element is arranged underneath the sensor housing and within the at least one opening adapted for being fitted around said shaft of said drive unit of the base plate,
wherein the sensor housing, the cover and the opening adapted for being fitted around said shaft of said drive unit have a predetermined size,
wherein the base plate comprises at least two openings adapted to allow the base plate to be connected to the drive unit by means of connecting elements, which are aligning mounting holes in the drive unit, wherein the drive unit is not part of the sensor, and
wherein the sensor housing is adapted to be connected to the base plate by means of a release mechanism.

This design ensures a secure and precise fit while reducing the number of special parts needed for various drive units and mounting patterns. As a result, installation becomes simpler and more accurate, saving time and lowering the chance of mistakes. Additionally, this reduces costs and increases system flexibility, allowing it to adapt to different setups without the need for custom parts.

This is achieved when the sensor housing, the cover and the opening adapted for being fitted around said shaft have a predetermined and therefore fixed size. The same applies for the opening adapted for being fitted around the shaft of the drive unit, but for each specific drive unit a specific base plate with openings adapted to allow the base plate to be connected to the drive unit by means of connecting elements, which are aligning the mounting holes in the drive unit, is to be used.

This enables it to accommodate a range of applications. Fewer screws and mounting parts streamline the installation process, cutting down on assembly effort.

The design also maximizes space within the sensor housing, as no screw holes penetrate the installation area, optimizing internal layout and reducing the number of dirty corners. This hygienic design makes the sensor easier to clean and more suitable for environments where cleanliness is critical.

Finally, simplified assembly and disassembly enhance convenience during cleaning, adjustments, and repairs, saving time and ensuring long-term functionality.

The sensor housing is fixed in the base plate by means of a rotary movement concentric to the shaft axis, which functions as a release mechanism. This mechanism allows for controlled detachment of the sensor housing from the base plate upon rotation, ensuring that the sensor can be easily removed or adjusted as needed while maintaining secure positioning during normal operation.

As regards the element adapted to be in active connection with the shaft of said drive unit, this element may be configured either to transmit a rotational force to the shaft or to rotate passively with the shaft.

As a driver, when used with the innovative sensor (though the drive unit itself is not part of the claim), any other suitable unit can be used. This includes any system that has a shaft, a rotating part to be driven, or similar components.

Furthermore, it should be noted that screws are used as an example of connection elements in the following discussion of the invention. However, it is understood that other types of connection elements could also be used for this purpose, depending on the specific application or design requirements.

In an embodiment of the invention, the release mechanism may comprise latches and latch tabs, wherein each latch is configured to lock behind a corresponding latch tab.

This configuration offers several advantages. First, each latch engages securely with its respective latch tab, ensuring a strong and stable lock. This not only supports fast and efficient locking but also minimizes the effort required to achieve precise alignment, significantly reducing the chances of misalignment during use. As a result, it guarantees consistent and reliable engagement.

This release mechanism allows for rapid and effortless engagement and disengagement, facilitating quick transitions between locked and unlocked states, and therefore providing a quick release mechanism.

In addition, the simplicity of this configuration makes maintenance easier, reducing the potential for operational failures and contributing to a more reliable and user-friendly system.

Furthermore, in another embodiment of the invention, the number of latches and corresponding latch tabs may be at least two or greater.

With this, enhanced security and stability due to the multiple engagement points are provided. This redundancy ensures a more reliable locking mechanism as the load is distributed across multiple latches and tabs, reducing wear and tear on individual components.

Additionally, having multiple latches enhances the system's ability to withstand high-stress environments and applications.

In another embodiment of the invention, the latches may be located on the sensor housing and the latch tabs on the base plate or the latches may be located on the base plate and the latch tabs on the sensor housing.

Thereby, flexibility to adapt the locking mechanism to various design constraints is provided. This dual configuration allows for versatile placement, making the system adaptable to different installation requirements. It ensures a reliable and stable lock regardless of the orientation and enhances the ease of assembly and maintenance. The design versatility also increases the system's applicability across a broader range of use cases.

Furthermore, in another embodiment of the invention, a contact surface on at least one latch as well as on the corresponding latch tab may comprise a slope.

The sloped surfaces align to each other on the respective surfaces of the latch and latch tab ensuring alignment of the latch and tab during engagement, thus minimizing the risk of misalignment. This design also enhances the locking force, as the sloped surfaces guide the components into a tightly secured position.

Furthermore, the increased locking force provides additional stability, ensuring that the components remain securely engaged even under high-stress conditions.

In a further embodiment of the invention, in the vicinity of at least one latch tab a groove may be arranged, which is adapted to facilitate movement of the corresponding latch.

In an assembled state of the sensor, the groove can absorb lateral forces acting against the connection, thereby providing additional support to the interlocking mechanism.

This means that when forces push sideways against the latch tabs, the groove effectively acts as a buffer, distributing the stress and preventing the tabs from disengaging.

This added support ensures that the latch remains securely locked, even under significant lateral pressure. With this, the system gains enhanced stability and robustness.

Furthermore, in another embodiment of the invention, the release mechanism may comprise insertion openings and/ or coaxial centering surfaces.

The insertion openings and coaxial centering surfaces facilitate precise alignment of components, enhancing the ease and accuracy of assembly and ensuring a secure, stable connection by preventing misalignment.

In another embodiment of the invention, the release mechanism may comprise an additional locking mechanism, which may comprise a further groove in the base plate which may be adapted to be aligned with a securing bolt that may be positioned within the plane of the base plate, wherein the securing bolt may be adapted to be actuated by a securing screw, the securing screw may be adapted to move the bolt via a stationary nut and simultaneously may compress a spring to engage the locking mechanism, and wherein the spring may be adapted to automatically release the locking mechanism upon loosening of the screw.

This design adds security by keeping the locking mechanism engaged, even under stress. The alignment of the groove with the securing bolt also ensures precise positioning.

This additional locking feature reduces the risk of accidental disengagement, making the system more reliable and safe.

The securing screw ensures controlled movement of the securing bolt, thus improving the reliability and stability of the locking mechanism.

Additionally, using a stationary nut to move the bolt allows for efficient force transfer. This design makes sure that the force applied by the securing screw is evenly distributed, thus leading to consistent and dependable engagement of the locking mechanism.

In a further embodiment of the invention, a symbol on the outer side of the sensor housing may indicate whether the release mechanism is in an open or closed position.

This gives users a clear and immediate visual clue about its status. This makes it easier and quicker to check the mechanism, improving both user convenience and operational efficiency. By allowing users to instantly see whether the sensor is locked or unlocked, it also helps reduce the risk of errors. Plus, the visual indicator adds an extra layer of safety, minimizing the chance of accidentally engaging or disengaging the release mechanism.

Additionally, the invention proposes a method for detecting an angular position of a shaft of a drive unit and a drive unit comprising a sensor for detecting an angular position of a shaft of a drive unit.

Within the present application, terms such as 'side' or 'lateral', 'rear', 'front', `top', 'bottom', 'bottom', `opposite', 'inside', 'outside' or the like, which describe the position of a first object relative to another object, preferably refer to the relative position of a respective part or object with respect to its position when fully assembled for its intended use.

In the following, the invention will be described in further detail with reference to the accompanying drawings, wherein:
- FIG. 1: depicts a sensor for detecting an angular position of a shaft of a drive unit according to an embodiment of the invention with a drive unit in an exploded view,
- FIG. 2a: depicts a sensor for detecting an angular position of a shaft of a drive unit according to an embodiment of the invention mounted on a drive unit,
- FIG. 2b: depicts a sensor for detecting an angular position of a shaft of a drive unit according to an embodiment of the invention mounted on a drive unit, which is smaller than the one depicted in FIG. 2a,
- FIG. 3: depicts a base plate according to an embodiment of the invention in a top view,
- FIG. 4: depicts the base plate according to an embodiment of the invention seen in a bottom view,
- FIG. 5: depicts a sensor housing according to an embodiment of the invention in a side view,
- FIG. 6: depicts the sensor housing and the base plate attached to the sensor housing in a bottom view,
- FIG. 7: depicts the sensor housing attached to the base plate, but unlocked to it,
- FIG. 8: depicts the sensor housing attached to the base plate and locked to it,

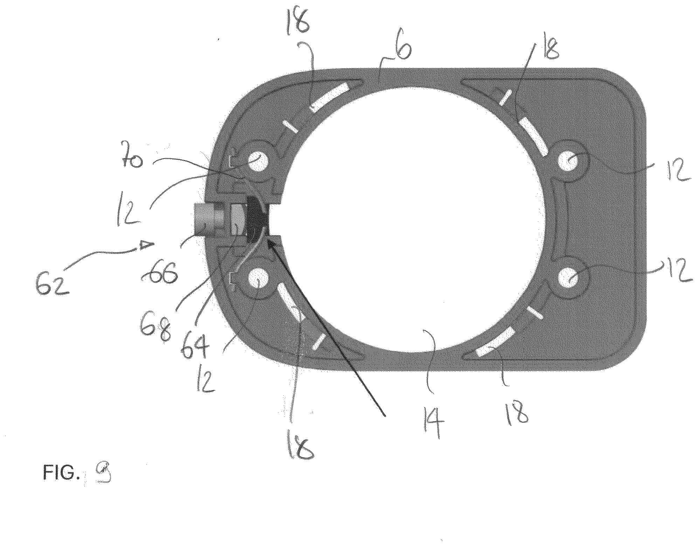

- FIG. 9: depicts the base plate with an additional locking mechanism.

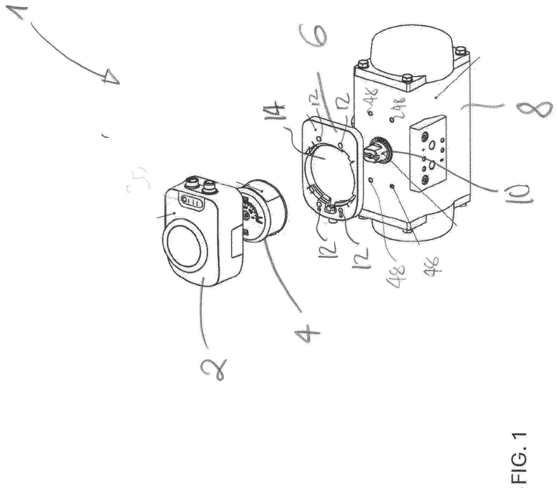

FIG. 1 depicts a sensor 1 according to an embodiment of the invention with a drive unit 8 in an exploded view.

A sensor 1 designed for detecting an angular position of a shaft of a drive unit 8 comprises a sensor housing 2 that is connected to a base plate 6.

An element 4, which is configured to interact with a shaft 10 of the drive unit 8, is also part of the setup. The element 4 features a cover 36 and is situated underneath the sensor housing, fitting within an opening 14 on the base plate that accommodates the drive unit's 8 shaft 10.

The sensor housing 2 serves as the protective enclosure for the element 4. It ensures the element 4 is shielded from external environmental factors such as dust, moisture, and mechanical damage. The housing 2 can be made from durable materials such as metal (e.g., aluminum or stainless steel) or high-strength plastic (e.g., polycarbonate or ABS).

The element 4 further comprises a cover 36, which protects the internal components of the element 4 and can be rotatably mounted independently of the base plate 6 and sensor housing 2. It is typically made from plastic or metal, depending on the required durability and environmental conditions.

This assembly is designed with the sensor housing 2, cover 36 and the opening 14 all with a predetermined and therefore fixed size. The base plate 6 itself includes at least two openings 12, enabling it to be securely attached to the drive unit 8 using connecting elements that align with mounting holes 48 in the drive unit. It's important to note that the drive unit 8 is not part of the sensor 1.

The sensor furthermore comprises a release mechanism that connects the sensor housing 2 to the base plate 6.

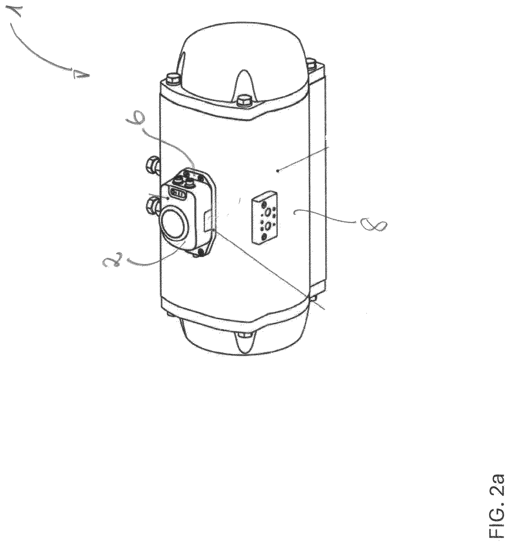

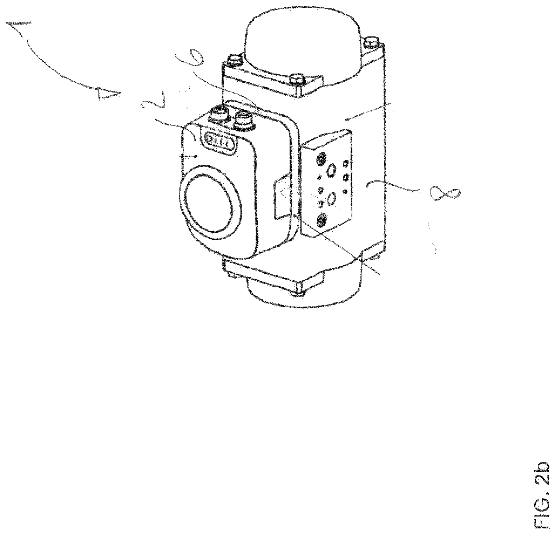

The base plate 6 may vary in size and shape, as well as in the location of the openings 12, to accommodate differently shaped drive units 8. Drive units 8 may be larger, as shown in FIG. 2b, or smaller, as seen in FIG. 2a. However, the size of the opening 14 remains consistent across all sizes of the drive unit 8.

For this purpose, the base plate 6 is adapted to fit on the drive unit 8 so that the openings 12 align with the corresponding openings on the drive unit 8. The size of the sensor housing 2 remains unchanged, as does the size of the opening 14.

Connecting elements, such as screws or bolts, are used to secure the base plate 6 to the drive unit 8 by aligning with the corresponding aligning mounting holes 48. These elements are usually made from metal, like stainless steel, to provide strength and resist corrosion.

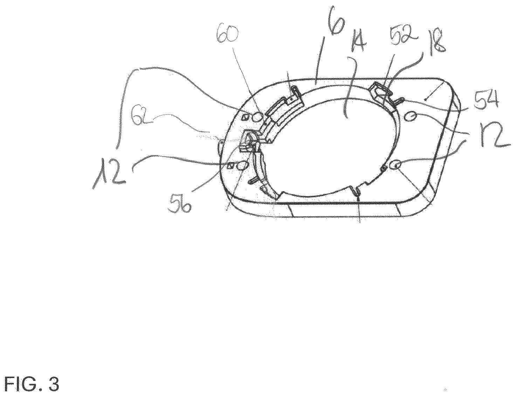

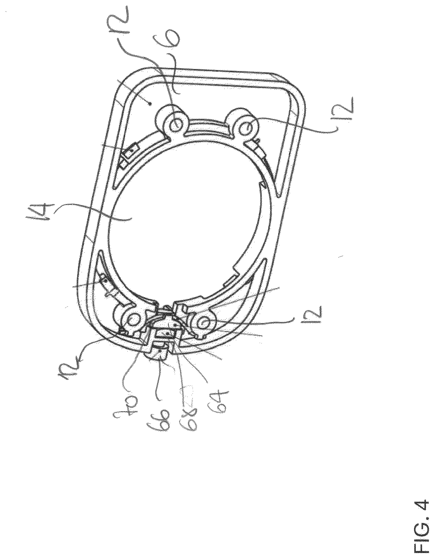

In FIG. 3 the base plate 6 is shown in a top view, whereas FIG. 4 shows the base plate 6 in a bottom view.

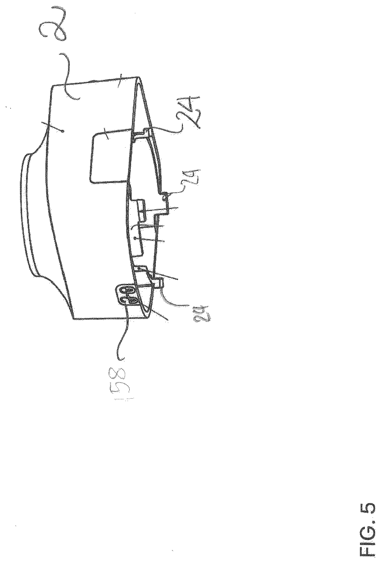

Besides the openings 14 to connect the base plate 6 to the drive unit 8, the base plate 6 comprises latch tabs 24. Those latch tabs 24 are adapted to interact with corresponding latches 52 on the sensor housing 2. The latches 52 lock behind the latch tabs 24, ensuring a secure and stable connection between the sensor housing 2 and the base plate 6. For this the sensor housing 2 may include a round component 28 comprising the latches 52 as it can be seen in FIG. 5.

The number of latches 52 and latch tabs 24 may be at least two or more, providing multiple engagement points that distribute the load and reduce wear on individual components. The latches 52 can be positioned on the sensor housing 2 while the latch tabs 24 are on the base plate 6, or vice versa. This dual configuration offers flexibility in adapting the locking mechanism to various design constraints and installation requirements.

The contact surfaces of at least one latch 52 and its corresponding latch tab 24 are sloped. The slopes guide the components into a tightly secured position. In the vicinity of at least one latch tab 24, a groove 54 is arranged to facilitate the movement of the corresponding latch 52. In an assembled state of the sensor 1, the groove 54 can absorb lateral forces acting against the connection, thereby providing additional support to the interlocking mechanism.

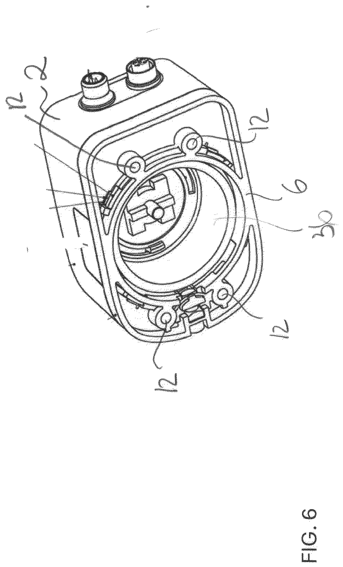

FIG. 6 shows a bottom view of the sensor housing 2, securely locked via the release mechanism. This mechanism enables quick and efficient locking and release of the sensor housing 2 and the base plate 6, ensuring fast assembly and disassembly.

The release mechanism includes insertion openings 18 and/or coaxial centering surfaces 60, providing precise and straightforward insertion and alignment of components.

Additionally, the release mechanism features an extra locking mechanism 62 for added security as it can be seen in FIG. 11. This locking mechanism consists of a further groove 56 in the base plate 6, designed to align with a securing bolt 64 positioned within the plane of the base plate 6. The securing bolt 64 is controlled by a securing screw 66. When the screw 66 is turned, it moves the bolt 64 via a stationary nut 68, while simultaneously compressing a spring 70 to engage the locking mechanism 62.

This design ensures that the securing bolt is precisely positioned and engaged, providing a stable and reliable lock. Upon loosening the screw 66, the spring 70 automatically releases the locking mechanism 62, ensuring a smooth and efficient unlocking process. This automatic release simplifies the operation, reducing the need for manual intervention and ensuring quick and reliable disengagement.

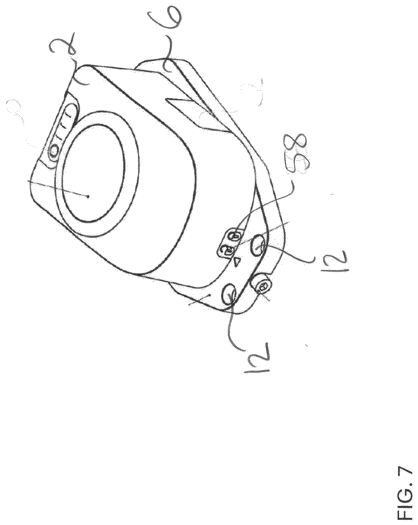

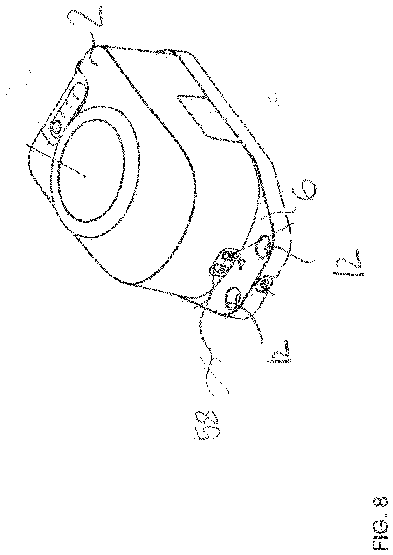

As shown in FIG. 7 and 8, the sensor housing 2 includes a symbol 58 that shows whether it is in a locked or unlocked state. In FIG. 7, an arrow aligns with the "unlocked" mark on the symbol 58 when the sensor housing 2 is unlocked. Conversely, as seen in FIG. 8, the arrow aligns with the "locked" mark on the symbol 58 when the sensor housing 2 is in the locked state.

The sensor housing 2 is fixed in the base plate 6 by means of a rotary movement concentric to the shaft axis, which functions as a release mechanism. This mechanism allows for controlled detachment of the sensor housing 2 from the base plate 6 upon rotation, ensuring that the sensor 1 can be easily removed or adjusted as needed while maintaining secure positioning during normal operation.

## Claims

1. A sensor (1) for detecting an angular position of a shaft of a drive unit (8), comprising
- a sensor housing (2), adapted for being connected to a base plate (6),
- an element (4) adapted for being in an active connection with the shaft (10) of said drive unit (8), wherein the element (4) further comprises a cover (36),
- a base plate (6) having at least one opening (14) adapted for being fitted around said shaft (10) of said drive unit (8),
wherein the element (4) is arranged underneath the sensor housing (2) and within the at least one opening (14) adapted for being fitted around said shaft (10) of said drive unit (8) of the base plate (6),
wherein the sensor housing (2), the cover (36) and the opening (14) adapted for being fitted around said shaft (10) of said drive unit (8) have a predetermined size,
wherein the base plate (6) comprises at least two openings (12) adapted to allow the base plate (6) to be connected to the drive unit (8) by means of connecting elements, which are aligning mounting holes (48) in the drive unit (8), wherein the drive unit (8) is not part of the sensor (1), and
wherein the sensor housing (2) is adapted to be connected to the base plate (6) by means of a release mechanism.

2. A sensor (1) for detecting an angular position of a shaft of a drive unit (8) according to claim 1,
wherein the release mechanism comprises latches (52) and latch tabs (24),
wherein each latch (52) is configured to lock behind a corresponding latch tab (24).

3. A sensor (1) for detecting an angular position of a shaft of a drive unit (8) according to claim 2,
wherein the number of latches (52) and corresponding latch tabs (24) is at least two or greater.

4. A sensor (1) for detecting an angular position of a shaft of a drive unit (8) according to claims 2 or 3,
wherein the latches (52) are located on the sensor housing (2) and the latch tabs (24) on the base plate (6) or the latches (52) are located on the base plate (6) and the latch tabs (24) on the sensor housing (2).

5. A sensor (1) for detecting an angular position of a shaft of a drive unit (8) according to any one of claims 2 to 4, wherein a contact surface on at least one latch (52) as well as on the corresponding latch tab (24) comprises a slope.

6. A sensor (1) for detecting an angular position of a shaft of a drive unit (8) according to any one of claims 2 to 5, wherein in the vicinity of at least one latch tab (24) a groove (54) is arranged, which is adapted to facilitate movement of the latch tabs (24).

7. A sensor (1) for detecting an angular position of a shaft of a drive unit (8) according to anyone of the previous claims,
wherein the release mechanism comprises insertion openings (18) and/ or coaxial centering surfaces (60).

8. A sensor (1) for detecting an angular position of a shaft of a drive unit (8) according to any one of the previous claims,
wherein the release mechanism comprises an additional locking mechanism (62), which comprises a further groove (56) in the base plate (6) adapted to be aligned with a securing bolt (64) that is positioned within the plane of the base plate (6),
wherein the securing bolt (64) is adapted to be actuated by a securing screw (66), the securing screw (66) being adapted to move the bolt (64) via a stationary nut (68) and simultaneously compress a spring (70) to engage the locking mechanism (62), and
wherein the spring (70) is adapted to automatically release the locking mechanism (62) upon loosening of the screw (66).

9. A sensor (1) for detecting an angular position of a shaft of a drive unit (8) according to any one of the previous claims,
wherein a symbol (58) on the outer side of the sensor housing (2) indicates whether the release mechanism is in an open or closed position.

10. A method for detecting an angular position of a shaft of a drive unit, comprising the steps of:
- providing a sensor (1) for detecting an angular position of a shaft of a drive unit according to any one of the previous claims,
wherein the sensor housing (2) is fixed in the base plate (6) by means of a rotary movement concentric to the shaft axis, functioning as a release mechanism.

11. A drive unit (8) comprising a sensor (1) for detecting an angular position of a shaft of a drive unit (8) according to any one of the previous claims.
